# EUROPEAN PATENT APPLICATION

(11) **EP 4 761 385 A1**
(43) Date of publication of application: **17.06.2026**
(21) Application number: 24858327.0
(22) Date of filing: 15.08.2024
(51) Int. Cl.: H04W 52/24

(54) **POWER CONTROL METHOD AND COMMUNICATION APPARATUS**

(30) Priority: 30.08.2023 CN 202311112822
(71) Applicant: HUAWEI TECHNOLOGIES CO., LTD., Shenzhen, Guangdong 518129 (CN)
(72) Inventor: YU, Xianglong, Shenzhen, Guangdong 518129 (CN); ZHAO, Daqian, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Goddar, Heinz J.
(86) International application number: PCT/CN2024/112432
(87) International publication number: WO 2025/044784

(57) **Abstract**

This application provides a power control method, including: A terminal device obtains indication information of at least one power control value of an SRS and indication information of at least one time unit set. The at least one time unit set is in one-to-one correspondence with the at least one power control value. The terminal device determines transmit power of the SRS in a first time unit set based on a first power control value corresponding to the first time unit set in the at least one time unit set. The terminal device sends the SRS to a network device in a time unit in the first time unit based on the transmit power. In a multi-station coordination scenario, the terminal device obtains the at least one power control value and the at least one time unit set, and determines, in the first time unit set in the at least one time unit set, the transmit power of the SRS based on the power control value corresponding to the first time unit set, so that resource overheads of frequently obtaining power control values by the terminal device can be reduced, and transmission performance in the multi-station coordination scenario can be improved.

## Description

This application claims priority to Chinese Patent Application No. 202311112822.4, filed with the China National Intellectual Property Administration on August 30, 2023 and entitled "POWER CONTROL METHOD AND COMMUNICATION APPARATUS", which is incorporated herein by reference in its entirety.

### TECHNICAL FIELD

This application relates to the field of communication technologies, and in particular, to a power control method and a communication apparatus.

### BACKGROUND

In a mobile communication system, a network device obtains uplink channel state information, and performs channel estimation determining mainly by receiving a sounding reference signal (sounding reference signal, SRS) sent by a terminal device. Because a time division duplex (time division duplex, TDD) system has uplink and downlink channel reciprocity, the network device may further obtain channel information of a downlink channel through SRS channel estimation. Generally, SRSs of terminal devices in a cell are orthogonally staggered in orthogonal dimensions such as an orthogonal frequency division multiplexing (orthogonal frequency division multiplexing, OFDM) symbol in time domain, a comb structure in frequency domain, and a cyclic shift in code domain, to ensure that SRSs of different terminal devices do not interfere with each other. SRSs of terminal devices in cells may occupy a same resource, and SRS interference is further reduced by allocating SRS sequences with a low cross-correlation.

In a non-coordinated scenario, SRS measurement of the network device is weakly interfered with by measurement of a neighboring network device. In a multi-station coordination scenario, the SRS measurement of the network device is strongly interfered with by another communication link. Consequently, a signal to interference plus noise ratio (signal to interference plus noise ratio, SINR) of the SRS is reduced, channel measurement precision is reduced, and system transmission performance deteriorates.

Therefore, in the multi-station coordination scenario, improving the channel measurement precision by controlling transmit power of the SRS is a current research hotspot.

### SUMMARY

This application provides a power control method and a communication apparatus, so that in a multi-station coordination scenario, signaling overheads for indicating a power control value of an SRS by a network device can be reduced, and channel measurement precision of the SRS can be improved.

According to a first aspect, a power control method is provided. The method may be performed by a terminal device or a component (for example, a chip or a chip system) of the terminal device. This is not limited in this application. The method includes:

The terminal device obtains indication information of at least one power control value of a sounding reference signal SRS and indication information of at least one time unit set, where the at least one time unit set is in one-to-one correspondence with the at least one power control value; the terminal device determines transmit power of the SRS in a first time unit set based on a first power control value corresponding to the first time unit set in the at least one time unit set; and the terminal device sends the SRS to a network device in a time unit in the first time unit set based on the transmit power.

It should be understood that the power control value in this application may also be referred to as a power adjustment value, a power offset value, or the like. For example, the power control value may be a transmit power control (transmit power control, TPC) command (TPC command) value. The at least one power control value in this application includes one or more power control values. The one or more power control values are in one-to-one correspondence with one or more time unit sets.

It should be understood that each of the at least one time unit set includes at least one time unit, and time units belonging to a same time unit set correspond to a same power control value. Optionally, time intervals between the time units belonging to the same time unit set may be the same.

According to the method provided in this application, the terminal device obtains the at least one power control value of the SRS and the at least one time unit set. The terminal device determines, based on a power control value in the at least one power control value, transmit power of the SRS by using the power control value in a time unit in a time unit set corresponding to the power control value. According to the method, the terminal device can be prevented from frequently obtaining a power control value for sending the SRS once to calculate the transmit power of the SRS, to further reduce complexity and resource overheads of the terminal device, and improve channel measurement precision of the SRS.

With reference to the first aspect, in some possible implementations, the indication information of the at least one time unit set is determined based on indication information of at least one effective time offset and/or indication information of at least one effective time period, and that the terminal device obtains the indication information of the at least one power control value of the SRS and the indication information of the at least one time unit set includes: The terminal device obtains the indication information of the at least one power control value of the sounding reference signal SRS, and the indication information of the at least one effective time offset and/or the indication information of the at least one effective time period.

It should be understood that the at least one time unit set is determined based on the at least one effective time offset and the at least one effective time period. In other words, the at least one effective time offset and the at least one effective time period can be used to determine the at least one time unit set. The at least one time unit set is in one-to-one correspondence with the at least one power control value. The terminal device determines the at least one time unit set based on the at least one effective time period and the at least one effective time offset, and determines the transmit power of the SRS based on the power control value corresponding to the at least one time unit set.

With reference to the first aspect, in some possible implementations, that the terminal device obtains the indication information of the at least one power control value, and the indication information of the at least one effective time offset and/or the indication information of the at least one effective time period includes:

The terminal device receives first information and second information, where the first information includes the indication information of the at least one power control value, and the second information includes the indication information of the at least one effective time offset and/or the indication information of the at least one effective time period.

It should be understood that the indication information of the at least one power control value of the SRS, and the indication information of the at least one effective time offset and/or the indication information of the at least one effective time period that are obtained by the terminal device may be carried in different information, for example, the first information and the second information. The first information includes the indication information of the at least one power control value of the SRS, and the second information includes the indication information of the at least one effective time offset and/or the indication information of the at least one effective time period.

With reference to the first aspect, in some possible implementations, the first information includes a first field, and the first field indicates the at least one power control value; or the first information includes a first index, and the first index corresponds to the at least one power control value.

It should be understood that the first information may directly indicate the indication information of the at least one power control value of the SRS by using the first field. After receiving the first information, the terminal device may determine the at least one power control value of the SRS based on the first field in the first information. The network device may reuse existing downlink information, and add a field to indicate the at least one power control value of the SRS, to avoid a compatibility problem.

It should be understood that a rule (for example, a table) about the first index and the at least one power control value of the SRS is predefined or preconfigured for the terminal device. In other words, the network device may directly indicate an index (for example, the first index) of the table or a sequence number of the table in the first information. The terminal device may directly determine, based on the first index and the predefined table, the at least one power control value of the SRS corresponding to the first index, to reduce the resource overheads.

With reference to the first aspect, in some possible implementations, that the terminal device obtains the indication information of the at least one power control value, and the indication information of the at least one effective time offset and/or the indication information of the at least one effective time period includes:

The terminal device receives third information, where the third information includes the indication information of the at least one power control value, and the indication information of the at least one effective time offset and/or the indication information of the at least one effective time period.

It should be understood that the indication information of the at least one power control value of the SRS, and the indication information of the at least one effective time offset and/or the indication information of the at least one effective time period that are obtained by the terminal device may be carried in a same piece of information, for example, the third information. The third information includes the indication information of the at least one power control value of the SRS, and the indication information of the at least one effective time offset and/or the indication information of the at least one effective time period.

With reference to the first aspect, in some possible implementations, the third information includes a second field, and the second field indicates the at least one power control value, and the at least one effective time offset and/or the at least one effective time period; or the third information includes a second index, and the second index corresponds to the at least one power control value, and the at least one effective time offset and/or the at least one effective time period.

It should be understood that the third information may directly indicate the indication information of the at least one power control value of the SRS, and the indication information of the at least one effective time offset and/or the indication information of the at least one effective time period by using the second field. After receiving the third information, the terminal device may directly determine the at least one power control value of the SRS, and the at least one effective time offset and/or the at least one effective time period based on the second field in the third information. The network device may reuse existing downlink information, and add a field to indicate the at least one power control value of the SRS, and the at least one effective time offset and/or the at least one effective time period, to avoid a compatibility problem.

It should be understood that a rule (for example, a table) about the second index, the at least one power control value of the SRS, and the at least one effective time offset and/or the at least one effective time period is predefined or preconfigured for the terminal device. In other words, the network device may directly indicate an index (for example, the first index) or a sequence number of the table in the third information. The terminal device may directly determine, based on the second index and the predefined table, the at least one power control value of the SRS, and the at least one effective time offset and/or the at least one effective time period that correspond to the second index, to reduce the resource overheads.

With reference to the first aspect, in some possible implementations, the at least one power control value is determined based on an interference combination of the terminal device, the interference combination is determined by at least one device, and the at least one device includes the terminal device.

It should be understood that the method provided in this application is applicable to a multi-station coordination scenario. The terminal device directly obtains at least one different power control value (for example, at least one first value) corresponding to the interference combination of the terminal device in the multi-station coordination scenario, and the at least one first value respectively corresponds to at least one different effective time offset and/or at least one different effective time period. The terminal device selects different first values based on different time offsets, calculates transmit power of the SRS, and may periodically send the SRS at the corresponding transmit power based on the at least one effective time period, to further reduce the complexity and the resource overheads of the terminal device.

According to a second aspect, a power control method is provided. The method may be performed by a network device or a component (for example, a chip or a chip system) of the network device. This is not limited in this application. The method includes:

The network device sends indication information of at least one power control value of a sounding reference signal SRS and indication information of at least one time unit set, where the at least one time unit set is in one-to-one correspondence with the at least one power control value, and the at least one time unit set includes a first time unit set; and the network device receives the SRS from a terminal device in a time unit in the first time unit set, where transmit power of the SRS is determined based on a first power control value corresponding to the first time unit set in the at least one time unit.

According to the method provided in this application, the network device sends the indication information of the at least one power control value of the SRS and the indication information of the at least one time unit set. The terminal device determines, based on the at least one power control value and the at least one time unit set, the transmit power of the SRS in the time unit in the first time unit set in the at least one time unit set by using the first power control value. The terminal device obtains the at least one time unit set and the at least one power control value corresponding to the at least one time unit set. Transmit power of the SRS is determined by using a same power control value in a time unit included in each of the at least one time unit set, so that the terminal device is prevented from frequently obtaining a power control value for sending the SRS once and calculating transmit power for sending the SRS once, to further reduce resource overheads of the terminal device, and also improve channel measurement precision of the SRS.

With reference to the second aspect, in some possible implementations, the indication information of the at least one time unit set is determined based on indication information of at least one effective time offset and/or indication information of at least one effective time period, and that the network device sends the indication information of the at least one power control value of the sounding reference signal SRS and the indication information of the at least one time unit set includes: The network device sends the indication information of the at least one power control value of the sounding reference signal SRS, and the indication information of the at least one effective time offset and/or the indication information of the at least one effective time period.

It should be understood that the network device sends the at least one power control value of the SRS, and the at least one effective time offset and/or the at least one effective time period corresponding to the at least one power control value. The terminal device obtains the at least one power control value, and the at least one effective time offset and/or the at least one effective time period, determines, based on the at least one effective time offset and/or the at least one effective time period, the transmit power of the SRS by using the corresponding at least one power control value, and sends the SRS to the network device.

It should be further understood that the at least one time unit set is determined based on the at least one effective time offset and/or the at least one effective time period, and the terminal device may directly determine, in a time unit corresponding to the at least one effective time offset and/or the at least one effective time period by using the power control value corresponding to the at least one effective time offset and/or the at least one effective time period, the transmit power for sending the SRS. The terminal device does not need to first determine the at least one time unit set based on the at least one effective time offset and/or the at least one effective time period, and then determine transmit power of the SRS in different time units based on power control values corresponding to time unit sets in the at least one time unit set.

With reference to the second aspect, in some possible implementations, that the network device sends the indication information of the at least one power control value of the sounding reference signal SRS, and the indication information of the at least one effective time offset and/or the indication information of the at least one effective time period includes:

The network device sends first information and second information to the terminal device, where the first information includes the indication information of the at least one power control value, and the second information includes the indication information of the at least one effective time offset and/or the indication information of the at least one effective time period.

It should be understood that the indication information of the at least one power control value, and the indication information of the at least one effective time offset and/or the indication information of the at least one effective time period that are sent by the network device may be carried in different information, for example, the first information and the second information. The first information includes the indication information of the at least one power control value of the SRS, and the second information includes the indication information of the at least one effective time offset and/or the indication information of the at least one effective time period.

With reference to the second aspect, in some possible implementations, the first information includes a first field, and the first field indicates the at least one power control value; or the first information includes a first index, and the first index corresponds to the at least one power control value.

It should be understood that the first information may directly indicate the indication information of the at least one power control value of the SRS by using the first field. After receiving the first information, the terminal device may directly determine the at least one power control value of the SRS based on the first field in the first information. The network device may reuse existing downlink information, and add the first field to indicate the at least one power control value of the SRS, to avoid a compatibility problem.

It should be understood that a rule (for example, a table) about the first index and the at least one power control value of the SRS is predefined or preconfigured for the terminal device. In other words, the network device may directly indicate an index (for example, the first index) or a sequence number of the table in the first information. The terminal device may directly determine, based on the first index and the predefined table, the at least one power control value of the SRS corresponding to the first index, to reduce the resource overheads.

With reference to the second aspect, in some possible implementations, that the network device sends the indication information of the at least one power control value of the sounding reference signal SRS, and the indication information of the at least one effective time offset and/or the indication information of the at least one effective time period includes:

The network device sends third information to the terminal device, where the third information includes the indication information of the at least one power control value, and the indication information of the at least one effective time offset and/or the indication information of the at least one effective time period.

It should be understood that the indication information of the at least one power control value of the SRS, and the indication information of the at least one effective time offset and/or the indication information of the at least one effective time period that are sent by the network device may be carried in a same piece of information, for example, the third information. The third information includes the indication information of the at least one power control value of the SRS, and the indication information of the at least one effective time offset and/or the indication information of the at least one effective time period.

With reference to the second aspect, in some possible implementations, the third information includes a second field, and the second field indicates the at least one power control value, and the at least one effective time offset and/or the at least one effective time period; or the third information includes a second index, and the second index corresponds to the at least one power control value, and the at least one effective time offset and/or the at least one effective time period.

It should be understood that the third information may directly indicate the indication information of the at least one power control value of the SRS, and the indication information of the at least one effective time offset and/or the indication information of the at least one effective time period by using the second field. After receiving the third information, the terminal device may directly determine the at least one power control value of the SRS, and the at least one effective time offset and/or the at least one effective time period based on the second field in the third information. The network device may reuse existing downlink information, and add the second field to indicate the at least one power control value of the SRS, and the at least one effective time offset and/or the at least one effective time period, to avoid a compatibility problem.

It should be understood that a rule (for example, a table) about the second index, the at least one power control value of the SRS, and the at least one effective time offset and/or the at least one effective time period is predefined or preconfigured for the terminal device. In other words, the network device may directly indicate an index (for example, the first index) or a sequence number of the table in the third information. The terminal device may directly determine, based on the second index and the predefined table, the at least one power control value of the SRS, and the at least one effective time offset and/or the at least one effective time period that correspond to the second index, to reduce the resource overheads.

With reference to the second aspect, in some possible implementations, before the network device sends the indication information of the at least one power control value of the SRS, the indication information of the at least one effective time offset and/or the indication information of the at least one effective time period, the method further includes: The network device determines the at least one power control value based on an interference combination of the terminal device, where the interference combination is determined by at least one device, and the at least one device includes the terminal device.

According to a third aspect, a communication apparatus is provided. The apparatus includes: a transceiver unit, configured to obtain indication information of at least one power control value of a sounding reference signal SRS, and indication information of at least one effective time offset and/or indication information of at least one effective time period, where the at least one effective time offset corresponds to the at least one power control value, and the at least one effective time period corresponds to the at least one power control value; and
a processing unit, configured to determine transmit power of the SRS based on the at least one power control value, and at least one effective time offset and/or the at least one effective time period.

The transceiver unit is further configured to send the SRS to a network device based on the transmit power.

It should be understood that the transceiver unit may further perform receiving and sending processing in the first aspect, and the processing unit is configured to perform processing in the first aspect other than receiving and sending.

According to a fourth aspect, a communication apparatus is provided. The apparatus includes: a transceiver unit, configured to send indication information of at least one power control value of a sounding reference signal SRS, and indication information of at least one effective time offset and/or indication information of at least one effective time period, where the at least one effective time offset corresponds to the at least one power control value, and the at least one effective time period corresponds to the at least one power control value.

The transceiver unit is configured to receive the SRS sent by a terminal device based on transmit power, where the transmit power is determined based on the at least one power control value, and the at least one effective time offset and/or the at least one effective time period.

It should be understood that the transceiver unit may further perform receiving and sending processing in the second aspect.

In a possible implementation, the communication apparatus further includes a processing unit. The processing unit is configured to perform processing in the second aspect other than receiving and sending.

According to a fifth aspect, a communication apparatus is provided, including a processor. The processor is coupled to a memory, and may be configured to execute instructions in the memory, to implement the method in any one of the first aspect and the possible implementations of the first aspect, or implement the method in any one of the second aspect and the possible implementations of the second aspect.

Optionally, the communication apparatus further includes the memory.

Optionally, the communication apparatus further includes a communication interface, and the processor is coupled to the communication interface.

In an implementation, the communication apparatus is a centralized user configuration function. When the communication apparatus is the centralized user configuration function, the communication interface may be a transceiver or an input/output interface.

In another implementation, the communication apparatus is a chip configured in a centralized user configuration function. When the communication apparatus is the chip configured in the centralized user configuration function, the communication interface may be an input/output interface.

Optionally, the transceiver may be a transceiver circuit. Optionally, the input/output interface may be an input/output circuit.

According to a sixth aspect, a processor is provided, including an input circuit, an output circuit, and a processing circuit. The processing circuit is configured to: receive a signal through the input circuit, and transmit a signal through the output circuit, to enable the processor to perform the method in any one of the possible implementations of the first aspect, or to enable the processor to perform the method in any one of the possible implementations of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a seventh aspect, a processing apparatus is provided, including a processor and a memory. The processor is configured to: read instructions stored in the memory, receive a signal through a receiver, and transmit a signal through a transmitter, to perform the method in any one of the possible implementations of the first aspect, or perform the method in any one of the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory. The memory and the processor may be integrated on a same chip, or may be separately disposed on different chips. A type of the memory and a manner of disposing the memory and the processor are not limited in this embodiment of this application.

It should be understood that a related data exchange process, for example, sending configuration information, may be a process of outputting the configuration information from the processor, and receiving configuration information may be a process of receiving input configuration information by the processor. Specifically, data output by the processor may be output to the transmitter, and input data received by the processor may be from the receiver. The transmitter and the receiver may be collectively referred to as a transceiver.

The processing apparatus in the seventh aspect may be one or more chips. The processor in the processing apparatus may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to an eighth aspect, a computer program product is provided. The computer program product includes a computer program (which may also be referred to as code or instructions). When the computer program is run, a computer is enabled to perform the method in any one of the possible implementations of the first aspect, or the computer is enabled to perform the method in any one of the possible implementations of the second aspect.

According to a ninth aspect, a computer-readable storage medium is provided. The computer-readable storage medium stores a computer program (which may also be referred to as code or instructions). When the computer program is run on a computer, the method in any one of the possible implementations of the first aspect is performed, or the method in any one of the possible implementations of the second aspect is performed.

### BRIEF DESCRIPTION OF DRAWINGS

FIG. 1 is a diagram of an architecture of a communication system 100 applicable to this application;
FIG. 2 is a schematic flowchart of a resource indication method for coordinated transmission according to an embodiment of this application;
FIG. 3 is a diagram of an interference combination of a terminal device according to an embodiment of this application;
FIG. 4 is a block diagram of a communication apparatus according to an embodiment of this application; and
FIG. 5 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a wireless-fidelity (wireless-fidelity, Wi-Fi) system, a 3rd generation partnership project (3rd generation partnership project, 3GPP)-related communication system, and another communication system (for example, a 6G system) or a plurality of communication convergence systems that may appear in the future.

A terminal device in embodiments of this application is a device having a wireless transceiver function, for example, may include a handheld device having a wireless connection function, or a processing device connected to a wireless modem. The terminal device may communicate with a core network via a radio access network RAN, and exchange voice and/or data with the RAN. The terminal device may be a user equipment (user equipment, UE), a wireless terminal device, a mobile terminal device, a device-to-device (device-to-device, D2D) terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may further include a mobile phone (or referred to as a "cellular" phone), a computer having a mobile terminal device, a portable, pocket-sized, handheld, or computer built-in mobile apparatus, or the like, for example, a device like a personal communication service (personal communication service, PCS) phone. In addition, the terminal device may alternatively be a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner. The terminal device may be fixed or mobile.

It should be noted that, in this application, an apparatus configured to implement a function of the terminal device may be a terminal device, or may be an apparatus, for example, a chip system, that can support a terminal device in implementing the function of the terminal device, and the apparatus may be installed in the terminal device. In this application, the chip system may include a chip, or may include a chip and another discrete component.

A network device in embodiments of this application is an access device through which the terminal device accesses a mobile communication system in a wireless manner, and includes a radio access network device, for example, a base station. The network device may alternatively be a device that communicates with the terminal device through an air interface. The network device may include an evolved NodeB (evolved NodeB) in a long term evolution (long term evolution, LTE) system or long term evolution-advanced (long term evolution-advanced, LTE-A). The evolved NodeB may be referred to as an eNB or an e-NodeB for short. The eNB is an apparatus that is deployed in a radio access network and that meets a fourth generation (fourth generation, 4G) mobile communication technology standard and that provides a wireless communication function for the terminal device. Alternatively, the network device may be a new radio controller (new radio controller, NR controller), a base station (gNodeB, gNB) in a 5G system, a central network element (central unit), a new radio base station, a remote radio unit, a micro base station (also referred to as a small cell), a relay (relay), a distributed network element (distributed unit), macro base stations in various forms, a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may also include a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to an eNB in a 4G system, and correspond to a gNB in a 5G system.

A base station in embodiments of this application may include a central unit (central unit, CU) and a distributed unit (distributed unit, DU), and a plurality of DUs may be centrally controlled by one CU. The CU and the DU may be divided based on functions that are of protocol layers of a wireless network and that are of the CU and the DU. For example, functions of a PDCP layer and a protocol layer above the PDCP layer are set on the CU, and functions of protocol layers below the PDCP layer, such as a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely disposed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control plane CU entity (CU-CP entity) and a user plane CU entity (CU-UP entity). In this network architecture, signaling generated by the CU may be sent to the terminal device through the DU, or signaling generated by a UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

The terminal device in embodiments of this application is connected to the radio access network device in a wireless manner, and the radio access network device is connected to a core network device in a wireless or wired manner. The core network device and the radio access network device may be independent and different physical devices, or a function of the core network device and a logical function of the radio access network device are integrated into a same physical device, or a part of functions of the core network device and a part of functions of the radio access network device are integrated into one physical device. The terminal device may be stationary, or may be movable.

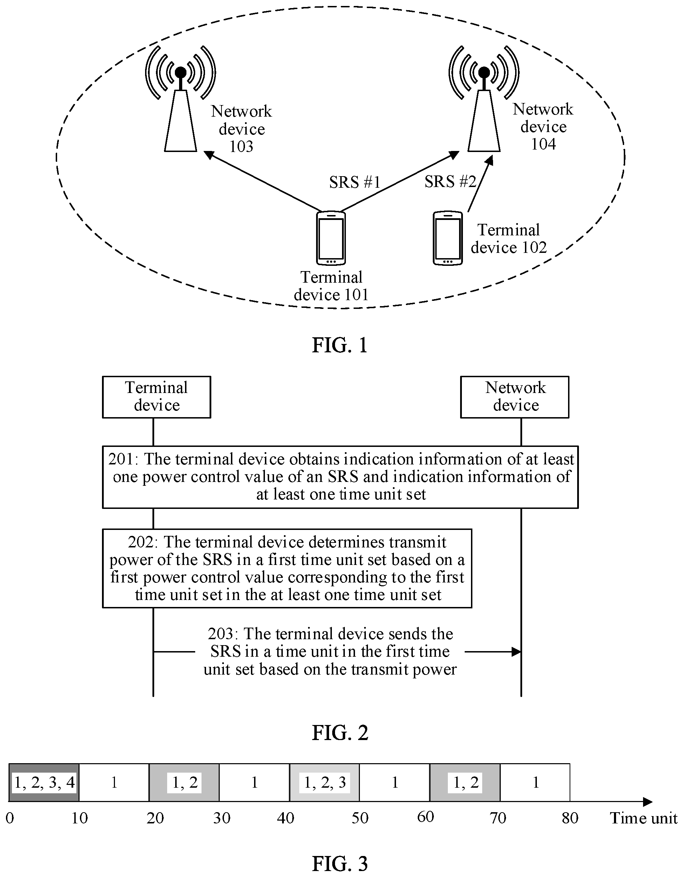

For ease of understanding of embodiments of this application, a communication system shown in FIG. 1 is first used as an example to describe in detail a communication system applicable to a method provided in embodiments of this application.

FIG. 1 is a diagram of an architecture of a communication system 100 applicable to an embodiment of this application. As shown in FIG. 1, the communication system 100 may include at least one terminal device, for example, terminal devices 101 and 102 shown in FIG. 1. The communication system 100 may further include at least two network devices, for example, a network device 103 and a network device 104 shown in FIG. 1. In the communication system 100, the network device 103 and the network device 104 may collaborate with each other to provide a service for the terminal device 101. Therefore, the terminal device 101 may separately communicate with the network device 103 and the network device 104 through a radio link. It should be noted that FIG. 1 is merely an example. In an actual communication system, three or more network devices may alternatively collaborate with each other to provide a service for the terminal devices 101 and 102.

It is assumed that the terminal device 101 is close to the network device 103, and the terminal device 101 is far from the network device 104. Generally, the network device 103 is considered as a primary network device (or referred to as a primary station) of the terminal device 101, and the network device 104 is considered as a coordinated network device (or referred to as a coordinated station or a secondary station) of the terminal device 101. The network device 104 needs to obtain, by using an SRS, channel information corresponding to the terminal device 101. The terminal device 101 sends an SRS #1 to the network device 104. In this case, the terminal device 102 sends an SRS #2 to the network device 104. A communication link between the terminal device 101 and the network device 104 has strong interference with a communication link between the terminal device 102 and the network device 104. Consequently, an SINR of the SRS #1 sent by the terminal device is severely affected, channel measurement precision of the network device for the terminal device is reduced, and system transmission performance deteriorates.

Currently, controlling transmit power for sending the SRS by the terminal device to reduce SRS channel measurement interference is an effective technical means for improving the channel measurement precision. A technical method for SRS power control includes a technical solution combining fractional path loss compensation and open-loop power control (fractional power control, FPC) and a technical solution based on fast closed-loop power control.

The open-loop power control is usually configured or adjusted through radio resource controller (radio resource controller, RRC) high layer signaling, and is related only to a power parameter configured by an RRC higher layer or path loss estimation. A path loss may be estimated based on a downlink synchronization signal and physical broadcast channel block (synchronization signal and physical broadcast channel block, SSB) or a channel state information-reference signal (channel state information-reference signal, CSI-RS). For a terminal device in a connected state, a UE-specific CSI-RS is usually configured for path loss estimation. For a terminal device for which no UE-specific CSI-RS is configured or uplink transmission related to a common channel, an SSB may be used for path loss estimation.

The closed-loop power control is power control related to historical transmit power. The network device calculates a transmit power control (transmit power control, TPC) value (or referred to as a TPC command (TPC command) value) of the terminal device based on a power control configuration parameter, feedback information of the terminal device, measurement information of the network device, and the like, and sends the TPC value to the terminal device via downlink control information (downlink control information, DCI), as shown in Table 1.

**Table 1**

| TPC Command Field | Accumulated *δ_{SRS}* [dB] (TPC accumulated value) | Absolute *δ_{SRS}* [dB] (TPC absolute value) |
|---|---|---|
| 0 | -1 | -4 |
| 1 | 0 | -1 |
| 2 | 1 | 1 |
| 3 | 3 | 4 |

As shown in Table 1, the terminal device determines, based on a power adjustment amount (for example, -1 dB) obtained through TPC mapping, maximum transmit power of the terminal device, the path loss, a quantity of RBs, a transmission format, and the like, the transmit power for sending the SRS, and sends the SRS to the network device based on the transmit power.

It can be learned that, the foregoing closed-loop power control method is mainly for a real-time TPC indication of an SRS pilot. However, in a multi-station coordination scenario (as shown in FIG. 1), how to reduce resource overheads while ensuring channel measurement precision of an SRS by controlling transmit power of the SRS is a research hotspot in this field.

Based on a technical problem in a conventional technology, this application provides a power control method. In a multi-station coordination scenario, transmit power for sending an SRS by a terminal device can be controlled with low resource overheads, to improve channel measurement precision of the SRS and enhance multi-station coordination transmission.

FIG. 2 is a schematic flowchart of a power control method according to an embodiment of this application.

201: A terminal device obtains indication information of at least one power control value of an SRS and indication information of at least one time unit set.

The indication information of the at least one power control value may be used to compensate for a channel change caused by fast fading. The at least one time unit set is in one-to-one correspondence with the at least one power control value. Each of the at least one time unit set corresponds to one power control value.

For example, the at least one time unit set includes a time unit set #1 and a time unit set #2. The time unit set #1 includes a time unit #1-1, a time unit #1-2, and a time unit 31-3, and the time unit set #2 includes a time unit #2-1, a time unit #2-2, and a time unit #2-3. A power control value corresponding to the time unit set #1 is A dB, and a power control value corresponding to the time unit set #2 is B dB. To be specific, power control values corresponding to the time unit #1-1, the time unit #1-2, and the time unit #1-3 are all A dB, and power control values corresponding to the time unit #2-1, the time unit #2-2, and the time unit #2-3 are all B dB.

It should be understood that, in a possible implementation, transmit power for sending the SRS by the terminal device in the time unit #1-1, the time unit #1-2, and the time unit #1-3 is the same, and transmit power for sending the SRS by the terminal device in the time unit #2-1, the time unit #2-2, and the time unit #2-3 is the same.

It should be further understood that time intervals between the time unit #1-1, the time unit #1-2, and the time unit #1-3 may be the same, and time intervals between the time unit #2-1, the time unit #2-2, and the time unit #2-3 may be the same.

Optionally, the indication information of the at least one time unit set is determined based on indication information of at least one effective time offset and/or indication information of at least one effective time period.

It should be understood that, in step 201, that the terminal device obtains the indication information of the at least one power control value of the SRS and the indication information of the at least one time unit set includes: The terminal device obtains the indication information of the at least one power control value of the SRS, and the indication information of the at least one effective time offset and/or the indication information of the at least one effective time period.

The at least one effective time offset corresponds to the at least one power control value, and the at least one effective time period corresponds to the at least one power control value.

It should be understood that the at least one power control value is used by the terminal device to adjust the transmit power of the SRS. The terminal device selects a corresponding power control value in a corresponding time unit set based on the obtained at least one power control value, and the obtained at least one effective time offset and/or at least one effective time period, to adjust a value of the transmit power of the SRS. For example, the terminal device selects a first power control value in a first time unit set to determine transmit power for sending the SRS by the terminal device in a time unit in the first time unit set.

It should be further understood that both the effective time offset (or referred to as effective time) and the effective time period (or referred to as an effective period) in this application may be indicated by using a time unit. For example, the time unit may be a slot (slot), a mini slot (mini slot), a subframe (subframe), a transmission time interval, or the like. This is not limited in this application.

Optionally, the at least one power control value is determined based on an interference combination of the terminal device, the interference combination is determined by at least one device, and the at least one device includes the terminal device. Each device in the interference combination of the terminal device may send an SRS to a same network device.

In an example, it is assumed that there are four terminal devices in a communication system: a UE 1, a UE 2, a UE 3, and a UE 4. SRS sending periods corresponding to the UE 1, the UE 2, the UE 3, and the UE 4 are respectively 10 time units, 20 time units, 40 time units, and 80 time units. When the UE 1, the UE 2, the UE 3, and the UE 4 perform SRS measurement, interference combinations at different moments are shown in FIG. 3. The UE 1, the UE 2, the UE 3, and the UE 4 have four interference combinations: {UE 1, UE 2, UE 3, UE 4}, {UE 1}, {UE 1, UE 2}, and {UE 1, UE 2, UE 3}. A change period of the four interference combinations is 80 time units. The UE 1 has four interference combinations: {UE 1, UE 2, UE 3, UE 4}, {UE 1}, {UE 1, UE 2}, and {UE 1, UE 2, UE 3}. The four interference combinations correspond to four power control values. The UE 2 has three interference combinations: {UE 1, UE 2, UE 3, UE 4}, {UE 1, UE 2}, and {UE 1, UE 2, UE 3}. The three interference combinations correspond to three power control values. The UE 3 has two interference combinations: {UE 1, UE 2, UE 3, UE 4} and {UE 1, UE 2, UE 3}. The two interference combinations correspond to two power control values. The UE 4 has one interference combination: {UE 1, UE 2, UE 3, UE 4}. The one interference combination corresponds to one power control value.

It is assumed that the terminal device is the UE 1, a power control value of an SRS obtained by the UE 1 may include four power control values corresponding to {UE 1, UE 2, UE 3, UE 4}, {UE 1}, {UE 1, UE 2}, and {UE 1, UE 2, UE 3}, and effective time offsets and/or effective time periods corresponding to the four power control values. For example, the four power control values corresponding to {UE 1, UE 2, UE 3, UE 4}, {UE 1}, {UE 1, UE 2}, and {UE 1, UE 2, UE 3} are respectively a TPC #1, a TPC #2, a TPC #3, and a TPC #4. As shown in FIG. 3, an effective time offset of the TPC #1 is 0, and an effective time period is 80 time units; an effective time offset of the TPC #2 is 10 time units, and an effective time period is 20 time units; an effective time offset of the TPC #3 is 20 time units, and an effective time period is 40 time units; and an effective time offset of the TPC #4 is 40 time units, and an effective time period is 80 time units.

The at least one power control value corresponds to the at least one effective time offset. That is, one power control value may correspond to one effective time offset. It is assumed that one power control value corresponds to one effective time offset. The effective time offset may be understood as an offset between a time unit in which the terminal device obtains indication information of the power control value and a time unit in which the power control value takes effect. For example, the effective time offset of the TPC #1 is 0 time units. To be specific, the terminal device obtains indication information of the power control value in a first time unit, and determines transmit power of the SRS in a second time unit by using the TPC #1, and a time interval between the first time unit and the second time unit is 0 time units. The effective time offset of the TPC #2 is 10 time units. To be specific, the terminal device obtains indication information of the power control value in a first time unit, and determines transmit power of the SRS in a second time unit by using the TPC #2, and the time interval between the first time unit and the second time unit is 10 time units. The effective time offset of the TPC #3 is 40 time units. To be specific, the terminal device obtains indication information of the power control value in a first time unit, and determines transmit power of the SRS in a second time unit by using the TPC #3, and the time interval between the first time unit and the second time unit is 40 time units. The effective time offset of the TPC #4 is 80 time units. To be specific, the terminal device obtains indication information of the power control value in a first time unit, and determines the transmit power of the SRS in a second time unit by using the TPC #4, and the time interval between the first time unit and the second time unit is 80 time units.

It should be understood that the terminal device may obtain the at least one power control value, and the at least one effective time offset and/or the at least one effective time period in the following several manners.

### Manner 1:

The terminal device receives first information and second information from the network device, where the first information includes the indication information of the at least one power control value, and the second information includes the indication information of the at least one effective time offset and/or the indication information of the at least one effective time period. The terminal device obtains the indication information of the at least one power control value, and the indication information of the at least one effective time offset and/or the indication information of the at least one effective time period based on the first information and the second information.

In a possible implementation, the first information includes a first field, and the first field indicates the at least one power control value.

In an example, the first information includes the first field, and a specific value corresponding to the first field may indicate a value of the at least one power control value. In this embodiment of this application, an example in which the first field indicates one of the at least one power control value is used to describe in detail a representation form of the power control value in the first field. When the first field indicates a plurality of power control values, representation forms are similar to a representation form of one power control value in the following example, and are not listed one by one in this application.

For example, it is assumed that 3 bits in the first field indicate one power control value. A specific value of a most significant bit/a least significant bit in the 3 bits may indicate that the power control value is a positive value or a negative value, and the other bits in the first field indicate a value of the power control value. It is assumed that the most significant bit in the 3 bits in the first field indicates a positive or negative value of the power control value, and the other bits indicate the value of the power control value. When the value of the most significant bit is "0", the power control value is a positive value. When the value of the most significant bit is "1", the power control value is a negative value. For example, if the 3 bits in the first field are 010, a power control value corresponding to 010 is +2 dB; if the 3 bits in the first field are 001, a power control value corresponding to 001 is +1 dB; if the 3 bits in the first field are 110, a power control value corresponding to 110 is -2 dB; or if the 3 bits in the first field are 101, a power control value corresponding to 101 is -1 dB. When the value of the most significant bit in the 3 bits in the first field is "1", the power control value is a positive value. When the value of the most significant bit in the 3 bits in the first field is "0", the power control value is a negative value. For example, if the 3 bits in the first field are 110, a power control value corresponding to 110 is +2 dB; or if the 3 bits in the first field are 001, a power control value corresponding to 001 is -1 dB.

In a possible implementation, the first information includes a first index, and the first index corresponds to the at least one power control value.

In an example, the first information includes the first index, and the first index corresponds to the at least one power control value. The network device indicates a related corresponding rule/principle/method about the at least one power control value via indication information, or the related corresponding rule/principle/method may be predefined/preconfigured by a system for the terminal device. For a specific example, refer to detailed descriptions in step 202.

It should be understood that the terminal device receives the first information and the second information from the network device. The network device may simultaneously send the first information and the second information to the terminal device, or the network device may sequentially send the first information and the second information to the terminal device. This is not limited in this application.

It should be further understood that the first information may be downlink information sent by the network device to the terminal device, for example, downlink control information DCI. In other words, the DCI sent by the network device to the terminal device includes the indication information of the at least one power control value of the SRS. Optionally, an indication field (for example, the first field) may be added to the DCI, and the first field indicates the at least one power control value; or the DCI may include the first index, and the first index corresponds to the at least one power control value. A specific position of the first field in the DCI is not limited in this application.

It should be further understood that the second information may be higher layer signaling sent by the network device to the terminal device, for example, radio resource control (radio resource control, RRC) signaling. In other words, the network device sends the RRC to the terminal device, and the RRC includes the indication information of the at least one effective time offset and/or the indication information of the at least one effective time period corresponding to the at least one power control value of the SRS.

Optionally, an indication field may be added to the RRC, to indicate the at least one effective time offset and/or the at least one effective time period corresponding to the at least one power control value. A specific implementation in which the indication field is added to the RRC to indicate the at least one effective time offset and/or the at least one effective time period corresponding to the at least one power control value is similar to the foregoing manner in which the indication field is added to the first information to indicate the at least one power control value. For details, refer to detailed descriptions of an example related to the first information in step 202.

### Manner 2:

The terminal device receives third information from the network device, where the third information includes the indication information of the at least one power control value, and the indication information of the at least one effective time offset and/or the indication information of the at least one effective time period. The terminal device obtains the indication information of the at least one power control value, and the indication information of the at least one effective time offset and/or the indication information of the at least one effective time period based on the third information.

In a possible implementation, the third information includes a second field, and the second field indicates the at least one power control value, and the at least one effective time offset and/or the at least one effective time period. In this embodiment of this application, an example in which the second field indicates one of the at least one power control value, and an effective time offset corresponding to the power control value and/or an effective time period corresponding to the power control value is used to describe in detail a representation form of the power control value in the second field. When the second field indicates a plurality of power control values, and a plurality of effective time offsets and/or a plurality of effective time periods, representation forms are similar to a representation form of one power control value in the following example, and are not listed one by one in this application.

In an example, the third information includes the second field, and 8 bits in the second field indicate the power control value, the effective time offset corresponding to the power control value, and the effective time period corresponding to the power control value. It is assumed that two most significant bits in the 8 bits indicate a value of the power control value, and the other bits in the 8 bits may indicate the effective time offset and/or the effective time period corresponding to the power control value.

It is assumed that the 8 bits in the second field are 10001100. First 2 bits "10" in the 8 bits indicate the power control value, "001" in the last 6 bits "001100" may indicate the effective time offset, and "100" may indicate the effective time period. The power control value corresponding to "10" is 2 dB. "001" may indicate that the effective time offset is one time block, and each time block includes 10 time units. "100" may indicate that the effective time period is four time blocks, in other words, the effective time period is 40 time units.

It is alternatively assumed that 6 bits in the second field are 10010. In this case, first 2 bits "10" in the 6 bits indicate the power control value, and "010" indicates the effective time offset. The power control value corresponding to "10" is 2 dB. "010" may indicate that the effective time offset is two time blocks, in other words, the effective time offset is 20 time units. The 6 bits do not indicate the effective time period. The effective time period corresponding to the power control value may be indicated via other indication information, or may be predefined/preconfigured for the terminal device. This is not specifically limited in this application.

It should be understood that the second field may further include a bit indicating that the power control value is a positive value or a negative value. This is similar to that the first field described in Manner 1 includes a bit indicating that the power control value is a positive value or a negative value. For details, refer to the example in Manner 1.

In a possible implementation, the third information includes a second index, and the second index corresponds to the at least one power control value, and the at least one effective time offset and/or the at least one effective time period.

In an example, the third information includes the second index, and the second index corresponds to the at least one power control value, and the at least one effective time offset and/or the at least one effective time period. The network device indicates a related corresponding rule/principle/method about the at least one power control value, the at least one effective time offset and/or the at least one effective time period via the indication information, or the related corresponding rule/principle/method may be predefined/preconfigured by a system for the terminal device. For a specific example, refer to detailed descriptions in step 202.

It should be understood that the third information may be downlink information sent by the network device to the terminal device, for example, downlink control information DCI. In other words, the DCI sent by the network device to the terminal device includes the indication information of the at least one power control value of the SRS. Optionally, an indication field (for example, the second field) may be added to the DCI, and the second field indicates the at least one power control value, and the at least one effective time offset and/or the at least one effective time period. A specific position of the second field in the DCI is not limited in this application. Alternatively, an existing field (for example, PDSCH dynamic rate matching indication information) is reused in the DCI to indicate the at least one power control value, and the at least one effective time offset and/or the at least one effective time period. Alternatively, the DCI includes the second index, and the second index corresponds to the at least one power control value, and the at least one effective time offset and/or the at least one effective time period. The DCI indicates the at least one power control value, and the at least one effective time offset and/or the at least one effective time period via a field or an index, so that signaling indication complexity can be greatly reduced, and resource overheads can be reduced.

202: The terminal device determines the transmit power of the SRS based on the first power control value corresponding to the first time unit set in the at least one time unit set.

It should be understood that the at least one time unit set is in one-to-one correspondence with the at least one power control value. It is assumed that the first time unit set in the at least one time unit set corresponds to the first power control value in the at least one power control value. In other words, the terminal device determines the transmit power of the SRS in the time unit in the first time unit set by using the first power control value.

It should be further understood that the at least one time unit set may be determined based on the at least one effective time offset and/or the at least one effective time period. To be specific, the terminal device selects the first power control value in the time unit in the first time unit set determined based on the at least one power control value, and the at least one effective time offset and/or the at least one effective time period, to determine the transmit power of the SRS.

It should be further understood that, after obtaining the indication information of the at least one power control value of the SRS, and the indication information of the at least one effective time offset and/or the indication information of the at least one effective time period, the terminal device selects the corresponding power control value (for example, the first power control value) in the corresponding time unit (for example, the time unit belonging to the first time unit set, referred to as the first time unit for short) based on the at least one power control value of the SRS, and the at least one effective time offset and/or the at least one effective time period, to adjust the value of the transmit power of the SRS.

For the foregoing two different manners in which the terminal device obtains the at least one power control value, and the at least one effective time offset and/or the at least one effective time period, the following describes, with reference to Manner 1 and Manner 2, an example in which after obtaining the at least one power control value, and the at least one effective time offset and/or the at least one effective time period, the terminal device selects the corresponding power control value (for example, the first power control value) in the corresponding time unit (for example, the first time unit) based on the at least one power control value of the SRS, and the at least one effective time offset and/or the at least one effective time period, to adjust the value of the transmit power of the SRS.

### For Manner 1:

The indication information of the at least one power control value, and the indication information of the at least one effective time offset and/or the indication information of the at least one effective time period are respectively carried in different information (for example, the first information and the second information). The terminal device determines, based on the first information and the second information that are received from the network device, the at least one power control value, and the at least one effective time offset corresponding to the at least one power control value and/or the effective time period corresponding to the at least one power control value. The terminal device selects the corresponding power control value based on the at least one effective time offset and/or the at least one effective time period, to determine the transmit power of the SRS.

In an example, the first information includes the first field, and the specific value corresponding to the first field may indicate the value of the at least one power control value. For a specific example, refer to the detailed descriptions in FIG. 2.

It should be understood that, when the first information indicates the at least one power control value in a form of the first field, other indication information indicates the at least one effective time offset of the at least one power control value corresponding to the first field, or the at least one effective time offset of the at least one power control value corresponding to the first field may be further predefined for the terminal device. If there is no other indication, the terminal device may consider that the effective time offset is 0 time units by default. To be specific, after obtaining the power control value, the terminal device immediately uses the power control value to adjust the transmit power of the SRS.

In another example, the first information includes the first index, and the first index corresponds to the at least one power control value. The network device indicates a correspondence about the at least one power control value via indication information, or the correspondence may be predefined/preconfigured by the system for the terminal device.

It is assumed that the power control value is a TPC value. A correspondence between TPC values shown in Table 2 is predefined for the terminal device.

**Table 2**

| TPC Command Field (first index) | Accumulated *δ_{SRS}* [dB] (TPC accumulated value) | Absolute *δ_{SRS}* [dB] (TPC absolute value) |
|---|---|---|
| 0 | -1, 1 | -4, 1 |
| 1 | -1, 3 | -4, 4 |
| 2 | 1, 3 | 1, 4 |
| 3 | -1, 1, 3 | -4, 1, 4 |
| 4 | 0, 1, 3 | -1, 1, 4 |
| 5 | -1, 0, 1 | -4, -1, 1 |
| 6 | -1, 0, 1, 3 | -4, -1, 1, 4 |
| 7 | -1, 1, 3, 3 | -4, 1,4,4 |
| 8 | 1, 1, 3, 3 | 1, 1, 4, 4 |
| ... | | |

As shown in Table 2, a first column, TPC Command Field, is used as the first index; a second column, Accumulated *δ_{SRS}* [dB], is the TPC accumulated value; and a third column, Absolute *δ_{SRS}* [dB], is the TPC absolute value. The terminal device determines a specific row in Table 2 based on the first index in the first information, and further selects, based on an indication of the network device or according to a predefined rule, a TPC accumulated value or a TPC absolute value as the power control value for determining the transmit power of the SRS.

It is assumed that a value of the first index in the first information is 0. To be specific, the terminal device determines, based on the first index 0, at least one power control value in a first row in Table 2, and determines the transmit power of the SRS based on the at least one power control value. The interference combination corresponding to the terminal device includes two power control values. For example, the TPC accumulated values correspond to two TPC values: "-1, 1", and the TPC absolute values correspond to two TPC values: "-4, 1". It is assumed that the terminal device selects, according to the predefined rule, the TPC accumulated values "-1, 1" as the power control values to calculate the transmit power of the SRS. The terminal device selects, based on effective time offsets and effective time periods that correspond to "-1, 1" and that are indicated by the second information, a corresponding power control value in "-1, 1" to calculate the transmit power of the SRS. For example, the second information indicates that an effective time offset corresponding to "-1" in the TPC accumulated values "-1, 1" is one time unit, an effective time period corresponding to "-1" is 30 time units, an effective time offset corresponding to "1" is 10 time units, and an effective time period corresponding to "1" is 40 time units. The terminal device receives the first information, and determines, based on the first index in the first information, the transmit power of the SRS by using "-1, 1" as the power control values. The terminal device receives the first information in a time unit #1, and determines the transmit power of the SRS in a time unit #2 by using "-1" as the power control value. An interval between the time unit #1 and the time unit #2 is three time units. A period for the terminal device to determine the transmit power of the SRS by using "-1" is 30 time units. The terminal device determines the transmit power of the SRS by using "1" as the power control value in a time unit #3, an interval between the time unit #3 and the time unit #1 is two time units, and a period for the terminal device to determine the transmit power of the SRS by using "1" is 40 time units.

It should be understood that, when the terminal device determines, based on the at least one effective time offset and/or the at least one effective time period by using the corresponding power control value in the at least one power control value, the transmit power for sending the SRS, the terminal device may determine current transmit power of the SRS based on a value of transmit power of the SRS in a previous time unit of a time unit in which the at least one effective time offset and/or the at least one effective time period are/is obtained, and the power control value corresponding to the effective time offset and/or the effective time period. Alternatively, the terminal device may determine current transmit power of the SRS based on transmit power of the SRS determined based on a previous effective time period and a power control value corresponding to the effective time period.

In an example, it is assumed that the terminal device determines, in the time unit #1, that the transmit power is a dB, and a is a positive number. The terminal device obtains at least one power control value (for example, -1), at least one effective time offset (for example, two time units), and at least one effective time period (for example, 20 time units) in the time unit #2, where the time unit #2 is after the time unit #1. The terminal device determines, in the time unit #3, that the transmit power for sending the SRS is a-1 dB, and a time offset between the time unit #3 and the time unit #2 is two time units. The terminal device determines, in a time unit #4, that the transmit power of the SRS is a-1-1 dB, and a time offset between the time unit #4 and the time unit #2 is 20 time units.

In another example, it is assumed that the terminal device determines, in the time unit #1, that the transmit power is a dB, and a is a positive number. The terminal device obtains at least one power control value (for example, -1 and 2), at least one effective time offset (for example, two time units and four time units), and at least one effective time period (for example, 20 time units) in the time unit #2, where the time unit #2 is after the time unit #1. The terminal device determines, in the time unit #3, that the transmit power for sending the SRS is a-1 dB, and a time offset between the time unit #3 and the time unit #2 is two time units. The terminal device determines, in a time unit #4, that the transmit power of the SRS is a-1+2 dB, and a time offset between the time unit #4 and the time unit #1 is four time units. The terminal device determines, in a time unit #5, that the transmit power of the SRS is a-1+2-1 dB, and a time offset between the time unit #5 and the time unit #3 is 20 time units. The terminal device determines, in a time unit #6, that the transmit power of the SRS is a-1+2-1+2 dB, and a time offset between the time unit #6 and the time unit #4 is 20 time units.

It should be further understood that, in a TDD mode, a value of the at least one effective time offset should not be 0 time units; and in an FDD mode, a value of the at least one effective time offset may be 0 time units.

### For Manner 2:

The indication information of the at least one power control value, and the indication information of the at least one effective time offset and/or the indication information of the at least one effective time period may be carried in a same piece of information (for example, the third information). The terminal device determines, based on the third information received from the network device, the at least one power control value, and the at least one effective time offset corresponding to the at least one power control value and/or the at least one effective time period corresponding to the at least one power control value. The terminal device selects the corresponding power control value based on the at least one effective time offset and/or the at least one effective time period, to determine the transmit power of the SRS.

In an example, the third information includes the second field, and a value corresponding to the second field may indicate the value of the at least one power control value, and the at least one effective time offset and/or the at least one effective time period. For a specific example, refer to the detailed descriptions in FIG. 2.

In another example, the third information includes the second index, and the second index corresponds to the at least one power control value, and the at least one effective time offset and/or the at least one effective time period. The network device indicates a correspondence between the at least one power control value and the at least one effective time offset and/or the at least one effective time period via indication information, or the correspondence may be predefined/preconfigured by the system for the terminal device.

For example, the correspondence between the at least one power control value, the at least one effective time offset, and the at least one effective time period is predefined for the terminal device. When the at least one power control value includes one power control value, the at least one effective time offset includes one effective time offset, and the at least one effective time period includes one effective time period, an example in which the power control value is a TPC value is used, as shown in Table 3.

**Table 3**

| TPC Command Field (second index) | Accumulated *δ_{SRS}* [dB] (TPC accumulated value) | Absolute *δ_{SRS}* [dB] (TPC absolute value) | Time Period Effective time period |
|---|---|---|---|
| 0 | -1 | -4 | 10 |
| 1 | 0 | -1 | 10 |
| 2 | 1 | 1 | 10 |
| 3 | 3 | 4 | 10 |
| 4 | -1 | -4 | 20 |
| 5 | 0 | -1 | 20 |
| 6 | 1 | 1 | 20 |
| 7 | 3 | 4 | 20 |
| ... | | | |

As shown in Table 3, a first column, TPC Command Field, is used as the second index; a second column, Accumulated *δ_{SRS}* [dB], is the TPC accumulated value; a third column, Absolute *δ_{SRS}* [dB], is the TPC absolute value; and a fourth column, Time Period, is the effective time period. The terminal device determines a specific row in Table 3 based on the second index in the third information, and further selects, based on an indication of the network device or according to a predefined rule, a TPC accumulated value or a TPC absolute value as the power control value for determining the transmit power of the SRS.

It should be understood that, as shown in Table 3, values of a TPC accumulated value and a TPC absolute value corresponding to each index in Table 3 each have one value. In other words, Table 3 indicates a power control value and an effective time period for sending the SRS once. The terminal device obtains one power control value and one effective time period based on the third information. After obtaining the power control value in a time unit #1, the terminal device calculates the transmit power of the SRS in a time unit #2 by using the power control value. An effective time offset corresponding to the power control value may be predefined by the system or preconfigured. In an FDD mode, a time offset between the time unit #1 and the time unit #2 may be 0 time units. In a TDD mode, a time offset between the time unit #1 and the time unit #2 is a non-zero number. Further, the terminal device periodically sends, based on Table 3 and a value of the effective time period corresponding to the power control value, the SRS by using the transmit power of the SRS determined in the time unit #2 based on the power control value.

It is assumed that the value of the second index in the third information is 2. The terminal device selects, based on the value 2 of the second index, one of the TPC accumulated value "3" and the TPC absolute value "4" in a third row in Table 3 as the power control value, to determine the transmit power of the SRS. An effective time period corresponding to the TPC accumulated value "3" and the TPC absolute value "4" is 10 time units. The terminal device receives the third information, and determines, based on the second index in the third information, a predefined effective time offset, and a correspondence in Table 3, the transmit power of the SRS by using the power control value (for example, the TPC accumulated value "3") in a corresponding time unit based on an effective time offset, and also periodically sends, based on the effective time period "10 time units", the SRS by using the transmit power of the SRS determined based on the TPC accumulated value "3" at the effective time offset.

It is alternatively assumed that the value of the second index in the third information is 6. The terminal device selects, based on the value 6 of the second index, one of the TPC accumulated value "1" and the TPC absolute value "1" in a seventh row in Table 3 as the power control value, to determine the transmit power of the SRS. An effective time period corresponding to the TPC accumulated value " 1" and the TPC absolute value "1 " is 20 time units. The terminal device receives the third information, and determines, based on the second index in the third information, a predefined effective time offset, and a correspondence in Table 3, the transmit power of the SRS by using the power control value (for example, the TPC absolute value "1") in a corresponding time unit based on an effective time offset, and also periodically sends, based on the effective time period "20 time units", the SRS by using the transmit power of the SRS determined based on the TPC accumulated value "1" at the effective time offset.

For example, the correspondence between the at least one power control value, the at least one effective time offset, and the at least one effective time period is predefined for the terminal device. When the at least one power control value includes one power control value, the at least one effective time offset includes one effective time offset, and the at least one effective time period includes one effective time period, an example in which the power control value is a TPC value is used, as shown in Table 4.

**Table 4**

| TPC Command Field (second index) | Accumulated *δ_{SRS}* [dB] (TPC accumulated value) | Absolute *δ_{SRS}* [dB] (TPC absolute value) | Time Offset Effective time offset | Time Period Effective time period |
|---|---|---|---|---|
| 0 | -1 | -4 | 0 | 10 |
| 1 | 0 | -1 | 0 | 10 |
| 2 | 1 | 1 | 10 | 20 |
| 3 | 3 | 4 | 10 | 20 |
| 4 | -1 | -4 | 30 | 30 |
| 5 | 0 | -1 | 30 | 30 |
| 6 | 1 | 1 | 50 | 80 |
| 7 | 3 | 4 | 50 | 80 |
| | ... | | | |

As shown in Table 4, a first column, TPC Command Field, is used as the second index; a second column, Accumulated *δ_{SRS}* [dB], is the TPC accumulated value; a third column, Absolute *δ_{SRS}* [dB], is the TPC absolute value; a fourth column, Time Offset, is used as the effective time offset; and a fifth column, Time Period, is used as the effective time period. The terminal device determines a specific row in Table 4 based on the second index in the third information, and further selects, based on the indication of the network device or according to the predefined rule, a TPC accumulated value or a TPC absolute value as the power control value for determining the transmit power of the SRS.

It should be understood that, as shown in Table 4, a TPC accumulated value and a TPC absolute value corresponding to each index in Table 4 each have one value. In other words, Table 4 indicates a power control value, an effective time offset, and an effective time period for sending the SRS once. The terminal device obtains one power control value, one effective time offset, and one effective time period based on the third information. The terminal device calculates the transmit power of the SRS based on the effective time offset corresponding to the TPC value by using the power control value, and periodically sends the SRS at the corresponding transmit power based on the effective time period.

It is assumed that the value of the second index in the third information is 0. The terminal device selects, based on the value 0 of the second index, one of the TPC accumulated value "-1" and the TPC absolute value "-4" in a first row in Table 4 as the power control value, to determine the transmit power of the SRS. An effective time offset corresponding to the TPC accumulated value "-1" and the TPC absolute value "-4" is 0 time units, and an effective time period is 10 time units. The terminal device receives the third information in the time unit #1, and determines the transmit power of the SRS in the time unit #2 by using the power control value (for example, the TPC accumulated value "-1"). An interval between the time unit #1 and the time unit #2 is 0 time units. The terminal device periodically sends the SRS based on the effective time period "10 time units" by using the transmit power of the SRS calculated in the time unit #2 based on the TPC accumulated value "-1".

It is alternatively assumed that the value of the second index in the third information is 7. The terminal device selects, based on the value 7 of the second index, one of the TPC accumulated value "3" and the TPC absolute value "4" in an eighth row in Table 4 as the power control value, to determine the transmit power of the SRS. An effective time offset corresponding to the TPC accumulated value "3" and the TPC absolute value "4" is 50 time units, and an effective time period is 80 time units. The terminal device receives the third information in the time unit #1, and determines the transmit power of the SRS in the time unit #2 by using the power control value (for example, the TPC absolute value "1"). An interval between the time unit #1 and the time unit #2 is 50 time units. The terminal device periodically sends the SRS based on the effective time period "20 time units" by using the transmit power of the SRS calculated in the time unit #2 based on the TPC accumulated value "1".

For example, the correspondence between the at least one power control value, the at least one effective time offset, and the at least one effective time period is predefined for the terminal device. When the at least one power control value includes a plurality of power control values, the at least one effective time offset includes a plurality of effective time offsets, and the at least one effective time period includes a plurality of effective time periods, an example in which the power control value is a TPC value is used, as shown in Table 5.

**Table 5**

| TPC Command Field (second index) | Accumulated *δ_{SRS}* [dB] (TPC accumulated value) | Absolute *δ_{SRS}* [dB] (TPC absolute value) | Time Offset Effective time offset | Time Period Effective time period |
|---|---|---|---|---|
| 0 | -1, 1 | -4, 1 | 10, 20 | 80 |
| 1 | -1, 3 | -4, 4 | 10, 20 | 80 |
| 2 | 1, 3 | 1, 4 | 10, 20 | 80 |
| 3 | -1, 1, 3 | -4, 1, 4 | 10, 20, 40 | 80 |
| 4 | 0, 1, 3 | -1, 1, 4 | 10, 20, 40 | 80 |
| 5 | -1, 0, 1 | -4, -1, 1 | 10, 20, 40 | 80 |
| 6 | -1, 0, 1, 3 | -4, -1, 1, 4 | 10, 20, 40, 80 | 80 |
| 7 | -1, 1, 3, 3 | -4, 1, 4, 4 | 10, 20, 40, 80 | 80 |
| | ... | | | |

As shown in Table 5, a first column, TPC Command Field, is used as the second index; a second column, Accumulated *δ_{SRS}* [dB], is the TPC accumulated value; a third column, Absolute *δ_{SRS}* [dB], is the TPC absolute value; a fourth column, Time Offset, is used as the effective time offset; and a fifth column, Time Period, is used as the effective time period. The terminal device determines a specific row in Table 6 based on the specific value of the second index in the third information, and further selects, based on the indication of the network device or according to the predefined rule, a TPC accumulated value or a TPC absolute value as the power control value for determining the transmit power of the SRS.

It should be understood that, as shown in Table 5, a TPC accumulated value and a TPC absolute value corresponding to each index in Table 5 each have a plurality of values. In other words, Table 5 indicates a plurality of power control values, a plurality of effective time offsets, and a plurality of effective time periods of the SRS. The terminal device obtains a plurality of power control values, a plurality of effective time offsets, and a plurality of effective time periods based on the third information. The terminal device periodically sends, based on the plurality of effective time offsets and the plurality of effective time periods corresponding to the plurality of power control values, the SRS based on the effective time periods by using the transmit power of the SRS determined based on the power control values at the effective time offsets.

It is assumed that the value of the second index in the third information is 2. The terminal device selects, based on the value 2 of the second index, one TPC value from the TPC accumulated values "1, 3 " and the TPC absolute values "1, 4" in a third row in Table 5 as the power control value, to determine the transmit power of the SRS. When the TPC accumulated value is "1" in "1, 3", the effective time offset is 10 time units. When the TPC accumulated value is "3", the effective time offset is 20 time units. When the TPC absolute value is "1"in "1, 4", the effective time offset is 10 time units. When the TPC absolute value is "4", the effective time offset is 20 time units. The terminal device is predefined to determine the transmit power of the SRS by using the TPC accumulated value as the power control value. The terminal device receives the third information from the network device in the time unit #1. The terminal device determines, based on the second index in the third information and Table 5, the transmit power of the SRS in the time unit #2 by using the TPC accumulated value "-1" as the power control value. The time interval between the time unit #1 and the time unit #2 is 10 time units. The terminal device determines, based on the second index in the third information and Table 5, the transmit power of the SRS in a time unit #3 by using the TPC accumulated value "3" as the power control value. A time interval between the time unit #1 and the time unit #3 is 20 time units. A period in which the terminal device determines the transmit power by using "1, 3" in the TPC accumulated values as power adjustment values is 80 time units.

For example, the correspondence between the at least one power control value, the at least one effective time offset, and the at least one effective time period is predefined for the terminal device. When the at least one power control value includes a plurality of power control values, the at least one effective time offset includes a plurality of effective time offsets, and the at least one effective time period includes a plurality of effective time periods, an example in which the power control value is a TPC value is used, as shown in Table 6.

**Table 6**

| TPC Command Field (second index) | Accumulated *δ_{SRS}* [dB] (TPC accumulated value) | Absolute *δ_{SRS}* [dB] (TPC absolute value) | Time Offset Effective time offset | Time Period Effective time period |
|---|---|---|---|---|
| 0 | -1, 1, 2, -1, 3, -3, -2, 0 | -4, 1, 3, -3, 5, -5, - 2, 1 | 0, 10, 20, 30, 40, 50, 60, 70 | 80 |
| 1 | -1, 3, 2, -4, 3, -3, -2, 0 | -4, 4, -3, 3, -5, 5, 2, -1 | 0, 10, 20, 30, 40, 50, 60, 70 | 80 |
| 2 | 1, 3, 2, 4, -3, -4, -2, 0 | 1, 4, 3, -3, 5, -5, 2, 1 | 0, 10, 20, 30, 40, 50, 60, 70 | 80 |
| 3 | -1, 1, 3, 2, 1, -3, -2, 0 | -4, 1, 4, -3, 5, -5, 2, 1 | 0, 10, 20, 30, 40, 50, 60, 70 | 80 |
| 4 | 0, 1, 3, 2, -1, -3, -2, 4 | -1, 1, 4, -4, 5, -5, 2, 3 | 0, 10, 20, 30, 40, 50, 60, 70 | 80 |
| | ... | | | |

As shown in Table 6, a first column, TPC Command Field, is used as the second index; a second column, Accumulated *δ_{SRS}* [dB], is the TPC accumulated value; a third column, Absolute *δ_{SRS}* [dB], is the TPC absolute value; a fourth column, Time Offset, is used as the effective time offset; and a fifth column, Time Period, is used as the effective time period. The terminal device determines a specific row in Table 6 based on the specific value of the second index in the third information, and further selects, based on the indication of the network device or according to the predefined rule, a TPC accumulated value or a TPC absolute value as the power control value for determining the transmit power of the SRS.

It should be understood that, as shown in Table 6, a TPC accumulated value and a TPC absolute value corresponding to each index in Table 6 each have eight values. In other words, Table 6 indicates each TPC value in one time period (for example, 80 time units), and an effective time offset and an effective time period corresponding to the TPC value. The terminal device obtains a plurality of power control values, a plurality of effective time offsets, and a plurality of effective time periods based on the third information. The terminal device periodically sends, based on the plurality of effective time offsets and the plurality of effective time periods corresponding to the plurality of power control values, the SRS based on the plurality of effective time periods by using the transmit power of the SRS determined based on the corresponding power control values at the effective time offsets.

It is assumed that the value of the second index in the third information is 1. The terminal device selects, based on the value 1 of the second index, one TPC value from the TPC accumulated values "-1, 1, 2, -1, 3, -3, -2, 0" and the TPC absolute values "-4, 1, 3, -3, 5, -5, - 2, 1 " in a second row in Table 6 as the power control value, to determine the transmit power of the SRS. When the TPC accumulated value is "-1" in "-1, 1, 2, -1, 3, -3, -2, 0", the effective time offset is 0. When the TPC accumulated value is "1", the effective time offset is 10 time units. When the TPC accumulated value is "2", the effective time offset is 20. When the TPC accumulated value is "-1", the effective time offset is 30 time units. When the TPC accumulated value is "3", the effective time offset is 40. When the TPC accumulated value is "-3", the effective time offset is 50 time units. When the TPC accumulated value is "-2", the effective time offset is 60 time units. When the TPC accumulated value is "1", the effective time offset is 70 time units. When the TPC absolute value is "-4" in "-4, 1, 3, -3, 5, -5, -2, 1", the effective time offset is 0 time units. When the TPC absolute value is "1", the effective time offset is 10 time units. When the TPC absolute value is "3", the effective time offset is 20 time units. When the TPC absolute value is "-3", the effective time offset is 30 time units. When the TPC absolute value is "5", the effective time offset is 40 time units. When the TPC absolute value is "-5", the effective time offset is 50 time units. When the TPC absolute value is "-2", the effective time offset is 60 time units. When the TPC absolute value is "1", the effective time offset is 70 time units.

It is assumed that the terminal device is predefined to determine the transmit power of the SRS by using the TPC accumulated value as the power control value. The terminal device receives the third information from the network device in the time unit #1. The terminal device determines, based on the second index in the third information and Table 6, the transmit power of the SRS in the time unit #2 by using the TPC accumulated value "-1" as the power control value. The time interval between the time unit #1 and the time unit #2 is 0 time units. The terminal device determines, based on the second index in the third information and Table 6, the transmit power of the SRS in the time unit #3 by using the TPC accumulated value "1" as the power control value. The time interval between the time unit #1 and the time unit #3 is 10 time units. The rest may be deduced by analogy.

It should be understood that the third information may be the downlink information sent by the network device to the terminal device, for example, the downlink control information DCI. In other words, the DCI sent by the network device to the terminal device includes the indication information of the power control value of the SRS. Optionally, the indication field (for example, the second field) may be added to the DCI, and the second field indicates the plurality of power control values, and the plurality of effective time offsets and/or the plurality of effective time periods. The specific position of the second field in the DCI is not limited in this application. Alternatively, the existing field (for example, the PDSCH dynamic rate matching indication information) is reused in the DCI to indicate the plurality of power control values, and the plurality of effective time offsets and/or the plurality of effective time periods. Alternatively, the DCI includes the second index, and the second index corresponds to the plurality of power control values, and the plurality of effective time offsets and/or the plurality of effective time periods. The DCI indicates the plurality of power control values, and the plurality of effective time offsets and/or the plurality of effective time periods via the field or the index, so that the signaling indication complexity can be greatly reduced, and the resource overheads can be reduced.

203: The terminal device sends the SRS in the time unit in the first time unit set based on the transmit power.

Specifically, the terminal device obtains the at least one power control value of the SRS and the at least one time unit set, and the terminal device determines the transmit power of the SRS based on the first power control value corresponding to the first time unit set in the at least one time unit set. The terminal device sends the SRS to the network device in the time unit in the first time unit set based on the determined transmit power of the SRS.

For example, the at least one time unit set is determined based on the at least one effective time offset and/or the at least one effective time period. The terminal device determines the first power control value based on the correspondence between the at least one effective time offset and/or the at least one effective time period and the at least one power control value. The first power control value corresponds to the first time unit set, and the first time unit set is determined based on the at least one effective time offset and/or the at least one effective time period. The terminal device determines the transmit power of the SRS based on the first power control value, and the terminal device sends, by using the transmit power, the SRS to the network device in the time unit in the first time unit set determined based on the at least one effective time offset and/or the at least one effective time period.

According to the method shown in FIG. 2, in a multi-station coordination scenario, the SRS signal of the terminal device is interfered by a signal of another terminal device. Consequently, SRS transmission performance of the terminal device deteriorates. According to the method provided in this application, the terminal device obtains the at least one power control value of the SRS and the at least one time unit set by using a periodic change of SRS interference of the terminal device, and the terminal device selects a corresponding power control value in a corresponding time unit set based on the at least one power control value and the at least one time unit set, to determine the transmit power of the SRS. In this way, signaling overheads of the power control value of the SRS in the multi-station coordination scenario are resolved, measurement precision of the SRS is improved, and the transmission performance is improved.

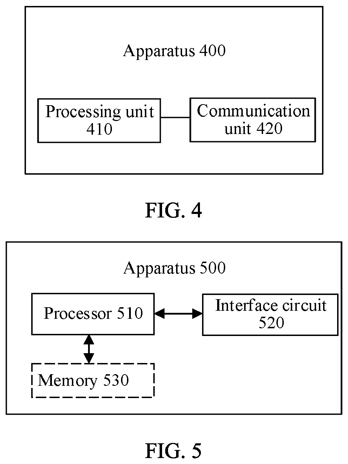

FIG. 4 and FIG. 5 are diagrams of structures of possible communication apparatuses according to embodiments of this application. These communication apparatuses may be configured to implement a function of the terminal device or the network device in the foregoing method embodiments, and therefore can also implement beneficial effects of the foregoing method embodiments. In this embodiment of this application, the communication apparatus may be the terminal device 101 or the terminal device 102 shown in FIG. 1, may be the network device 103 or the network device 104 shown in FIG. 1, or may be a module (for example, a chip) used in the terminal device or the network device.

As shown in FIG. 4, a communication apparatus 400 includes a processing unit 410 and a transceiver unit 420. The communication apparatus 400 is configured to implement a function of the terminal apparatus or the network apparatus in the method embodiment shown in FIG. 4.

When the communication apparatus 400 is configured to implement the function of the terminal device in the method embodiment shown in FIG. 2,
the transceiver unit 420 is configured to obtain indication information of at least one power control value of a sounding reference signal SRS and indication information of at least one time unit set, where the at least one time unit set is in one-to-one correspondence with the at least one power control value; and
the processing unit 410 is configured to determine transmit power of the SRS in a first time unit set based on a first power control value corresponding to the first time unit set in the at least one time unit set, where the transceiver unit 420 is further configured to send the SRS to the network device in a first time unit in the first time unit set based on the transmit power.

The transceiver unit 420 may perform receiving and sending processing in FIG. 2.

In a possible implementation, the communication apparatus 400 further includes the processing unit 410. The processing unit 410 may perform processing in FIG. 4 other than receiving and sending.

When the communication apparatus 400 is configured to implement the function of the network device in the method embodiment shown in FIG. 4,
the transceiver unit 420 sends indication information of at least one power control value of a sounding reference signal SRS and indication information of at least one time unit set to the terminal device, where the at least one time unit set is in one-to-one correspondence with the at least one power control value, and the at least one time unit set includes a first time unit set.

The transceiver unit 420 is further configured to receive the SRS from the terminal device in a time unit in the first time unit set, where transmit power of the SRS is determined based on a first power control value corresponding to the first time unit set, and the at least one power control value includes the first power control value.

The transceiver unit 420 may perform receiving and sending processing in FIG. 2.

In a possible implementation, the communication apparatus 400 further includes the processing unit 410. The processing unit 410 may perform processing in FIG. 4 other than receiving and sending.

As shown in FIG. 5, a communication apparatus 510 includes a processor 510 and an interface circuit 520. The processor 510 and the interface circuit 520 are coupled to each other. It may be understood that the interface circuit 520 may be a transceiver or an input/output interface. Optionally, the communication apparatus 510 may further include a memory 530, configured to: store instructions executed by the processor 510, store input data needed by the processor 510 to run instructions, or store data generated after the processor 510 runs instructions.

When the communication apparatus 510 is configured to implement the method shown in FIG. 4, the processor 510 is configured to implement a function of the processing unit 410, and the interface circuit 520 is configured to implement a function of the transceiver unit 420.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

According to the method provided in embodiments of this application, this application further provides a computer program product. The computer program product includes computer program code. When the computer program code is run on a computer, the computer is enabled to perform the method of the terminal device in the foregoing method embodiments.

According to the method provided in embodiments of this application, this application further provides a computer program product. The computer program product includes computer program code. When the computer program code is run on a computer, the computer is enabled to perform the method of the first network device in the foregoing method embodiments.

According to the method provided in embodiments of this application, this application further provides a computer program product. The computer program product includes computer program code. When the computer program code is run on a computer, the computer is enabled to perform the method of the second network device in the foregoing method embodiments.

According to the method provided in embodiments of this application, this application further provides a computer-readable medium. The computer-readable medium stores program code. When the program code is run on a computer, the computer is enabled to perform the method of the terminal device in the foregoing method embodiments.

According to the method provided in embodiments of this application, this application further provides a computer-readable medium. The computer-readable medium stores program code. When the program code is run on a computer, the computer is enabled to perform the method of the first network device in the foregoing method embodiments.

According to the method provided in embodiments of this application, this application further provides a computer-readable medium. The computer-readable medium stores program code. When the program code is run on a computer, the computer is enabled to perform the method of the second network device in the foregoing method embodiments.

An embodiment of this application further provides a processing apparatus, including a processor and an interface. The processor is configured to perform the data scheduling method for coordinated transmission in any one of the foregoing method embodiments.

An embodiment of this application further provides a data scheduling system for coordinated transmission. The system includes the first network device, the second network device, and the terminal device in the foregoing embodiments.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

A person of ordinary skill in the art may be aware that, various illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that "at least one" in embodiments of this application means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, and c may represent a, b, c, a and b, a and c, b and c, or a, b, and c. Each of a, b, and c may be in a singular form or a plural form.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, a part contributing to a conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power control method, applied to a first communication apparatus, and comprising:
obtaining indication information of at least one power control value of a sounding reference signal SRS and indication information of at least one time unit set, wherein the at least one time unit set is in one-to-one correspondence with the at least one power control value;
determining transmit power of the SRS in a first time unit set based on a first power control value corresponding to the first time unit set in the at least one time unit set; and
sending the SRS to a network device in a time unit in the first time unit set based on the transmit power.

2. The method according to claim 1, wherein the indication information of the at least one time unit set is determined based on indication information of at least one effective time offset and/or indication information of at least one effective time period; and
the obtaining the indication information of the at least one power control value of the SRS and the indication information of the at least one time unit comprises:
obtaining the indication information of the at least one power control value of the SRS, and the indication information of the at least one effective time offset and/or the indication information of the at least one effective time period.

3. The method according to claim 2, wherein the obtaining the indication information of the at least one power control value of the SRS, and the indication information of the at least one effective time offset and/or the indication information of the at least one effective time period comprises:
receiving first information and second information, wherein the first information comprises the indication information of the at least one power control value, and the second information comprises the indication information of the at least one effective time offset and/or the indication information of the at least one effective time period.

4. The method according to claim 3, wherein the first information comprises a first field, and the first field indicates the at least one power control value; or
the first information comprises a first index, and the first index corresponds to the at least one power control value.

5. The method according to claim 2, wherein the obtaining the indication information of the at least one power control value of the SRS, and the indication information of the at least one effective time offset and/or the indication information of the at least one effective time period comprises:
receiving third information, wherein the third information comprises the indication information of the at least one power control value, and the indication information of the at least one effective time offset and/or the indication information of the at least one effective time period.

6. The method according to claim 5, wherein the third information comprises a second field, and the second field indicates the at least one power control value, and the at least one effective time offset and/or the at least one effective time period; or
the third information comprises a second index, and the second index corresponds to the at least one power control value, and the at least one effective time offset and/or the at least one effective time period.

7. The method according to any one of claims 1 to 6, wherein the at least one power control value is determined based on an interference combination of the first communication apparatus, the interference combination is determined by at least one device, and the at least one device comprises the first communication apparatus.

8. A power control method, applied to a second communication apparatus, and comprising:
sending indication information of at least one power control value of a sounding reference signal SRS and indication information of at least one time unit set to a terminal device, wherein the at least one time unit set is in one-to-one correspondence with the at least one power control value, and the at least one time unit set comprises a first time unit set; and
receiving the SRS from the terminal device in a time unit in the first time unit set, wherein transmit power of the SRS is determined based on a first power control value corresponding to the first time unit set, and the at least one power control value comprises the first power control value.

9. The method according to claim 8, wherein the indication information of the at least one time unit set is determined based on indication information of the at least one effective time offset and/or indication information of the at least one effective time period; and
the sending the indication information of the at least one power control value of the SRS and the indication information of the at least one time unit comprises:
sending the indication information of the at least one power control value of the SRS, and the indication information of the at least one effective time offset and/or the indication information of the at least one effective time period.

10. The method according to claim 9, wherein the sending the indication information of the at least one power control value of the SRS, and the indication information of the at least one effective time offset and/or the indication information of the at least one effective time period comprises:
sending first information and second information to the terminal device, wherein the first information comprises the indication information of the at least one power control value, and the second information comprises the indication information of the at least one effective time offset and/or the indication information of the at least one effective time period.

11. The method according to claim 10, wherein the first information comprises a first field, and the first field indicates the at least one power control value; or
the first information comprises a first index, and the first index corresponds to the at least one power control value.

12. The method according to claim 10, wherein the sending the indication information of the at least one power control value of the sounding reference signal SRS, and the indication information of the at least one effective time offset and/or the indication information of the at least one effective time period comprises:
sending third information to the terminal device, wherein the third information comprises the indication information of the at least one power control value, and the indication information of the at least one effective time offset and/or the indication information of the at least one effective time period.

13. The method according to claim 12, wherein the third information comprises a second field, and the second field indicates the at least one power control value, and the at least one effective time offset and/or the at least one effective time period; or
the third information comprises a second index, and the second index corresponds to the at least one power control value, and the at least one effective time offset and/or the at least one effective time period.

14. The method according to any one of claims 8 to 13, wherein before the sending the indication information of the at least one power control value of the SRS and the indication information of the at least one time unit, the method further comprises:
determining the at least one power control value based on an interference combination of the terminal device, wherein the interference combination is determined by at least one device, and the at least one device comprises the terminal device.

15. A communication apparatus, comprising:
the transceiver unit, configured to obtain indication information of at least one power control value of a sounding reference signal SRS and indication information of at least one time unit set, wherein the at least one time unit set is in one-to-one correspondence with the at least one power control value; and
the processing unit, configured to determine transmit power of the SRS in a first time unit set based on a first power control value corresponding to the first time unit set in the at least one time unit set, wherein
the transceiver unit is further configured to send the SRS to a network device in a time unit in the first time unit set based on the transmit power.

16. The apparatus according to claim 15, wherein the indication information of the at least one time unit set is determined based on indication information of at least one effective time offset and/or indication information of at least one effective time period; and
that the transceiver unit is configured to obtain the indication information of the at least one power control value of the SRS and the indication information of the at least one time unit comprises:
the transceiver unit is configured to obtain the indication information of the at least one power control value of the SRS, and the indication information of the at least one effective time offset and/or the indication information of the at least one effective time period.

17. The apparatus according to claim 16, wherein that the transceiver unit is configured to obtain the indication information of the at least one power control value of the SRS, and the indication information of the at least one effective time offset and/or the indication information of the at least one effective time period comprises:
the transceiver unit is configured to receive first information and second information, wherein the first information comprises the indication information of the at least one power control value, and the second information comprises the indication information of the at least one effective time offset and/or the indication information of the at least one effective time period.

18. The apparatus according to claim 17, wherein the first information comprises a first field, and the first field indicates the at least one power control value; or
the first information comprises a first index, and the first index corresponds to the at least one power control value.

19. The apparatus according to claim 16, wherein that the transceiver unit is configured to obtain the indication information of the at least one power control value of the SRS, and the indication information of the at least one effective time offset and/or the indication information of the at least one effective time period comprises:
the transceiver unit is configured to receive third information, wherein the third information comprises the indication information of the at least one power control value, and the indication information of the at least one effective time offset and/or the indication information of the at least one effective time period.

20. The apparatus according to claim 19, wherein the third information comprises a second field, and the second field indicates the at least one power control value, and the at least one effective time offset and/or the at least one effective time period; or
the third information comprises a second index, and the second index corresponds to the at least one power control value, and the at least one effective time offset and/or the at least one effective time period.

21. The apparatus according to any one of claims 15 to 20, wherein the at least one power control value is determined based on an interference combination of the communication apparatus, the interference combination is determined by at least one device, and the at least one device comprises the communication apparatus.

22. A communication apparatus, comprising:
a transceiver unit, configured to send indication information of at least one power control value of a sounding reference signal SRS and indication information of at least one time unit set to a terminal device, wherein the at least one time unit set is in one-to-one correspondence with the at least one power control value, and the at least one time unit set comprises a first time unit set, wherein
the transceiver unit is further configured to receive the SRS from the terminal device in a time unit in the first time unit set, wherein transmit power of the SRS is determined based on a first power control value corresponding to the first time unit set, and the at least one power control value comprises the first power control value.

23. The apparatus according to claim 22, wherein the indication information of the at least one time unit set is determined based on indication information of the at least one effective time offset and/or indication information of the at least one effective time period; and
that the transceiver unit is configured to send the indication information of the at least one power control value of the SRS and the indication information of the at least one time unit comprises:
the transceiver unit is configured to send the indication information of the at least one power control value of the SRS, and the indication information of the at least one effective time offset and/or the indication information of the at least one effective time period.

24. The apparatus according to claim 23, wherein that the transceiver unit is configured to send the indication information of the at least one power control value of the SRS, and the indication information of the at least one effective time offset and/or the indication information of the at least one effective time period comprises:
the transceiver unit is configured to send first information and second information to the terminal device, wherein the first information comprises the indication information of the at least one power control value, and the second information comprises the indication information of the at least one effective time offset and/or the indication information of the at least one effective time period.

25. The apparatus according to claim 24, wherein the first information comprises a first field, and the first field indicates the at least one power control value; or
the first information comprises a first index, and the first index corresponds to the at least one power control value.

26. The apparatus according to claim 24, wherein that the transceiver unit is configured to send the indication information of the at least one power control value of the sounding reference signal SRS, and the indication information of the at least one effective time offset and/or the indication information of the at least one effective time period comprises:
the transceiver unit is configured to send third information to the terminal device, wherein the third information comprises the indication information of the at least one power control value, and the indication information of the at least one effective time offset and/or the indication information of the at least one effective time period.

27. The apparatus according to claim 26, wherein the third information comprises a second field, and the second field indicates the at least one power control value, and the at least one effective time offset and/or the at least one effective time period; or
the third information comprises a second index, and the second index corresponds to the at least one power control value, and the at least one effective time offset and/or the at least one effective time period.

28. The apparatus according to any one of claims 22 to 27, wherein before the transceiver unit is configured to send the indication information of the at least one power control value of the SRS and the indication information of the at least one time unit,
a processing unit is configured to determine the at least one power control value based on an interference combination of the terminal device, wherein the interference combination is determined by at least one device, and the at least one device comprises the terminal device.

29. A computer-readable storage medium, wherein the computer-readable storage medium stores a computer program, and
when the computer program is run on a computer, the computer is enabled to perform the method according to any one of claims 1 to 7, or perform the method according to any one of claims 8 to 14.

30. A computer program product, wherein the computer program product comprises a computer program or instructions used to perform the method according to any one of claims 1 to 7, or a computer program or instructions used to perform the method according to any one of claims 8 to 14.
